# EUROPÄISCHE PATENTANMELDUNG

(11) **EP 1 835 210 A1**
(43) Veröffentlichungstag der Anmeldung: **19.09.2007**
(21) Anmeldenummer: 07103309.6
(22) Anmeldetag: 01.03.2007
(51) Int. Cl.: F16K 15/14, B65D 77/22

(54) **Ventil**

(30) Priorität: 14.03.2006 DE 102006012112
(71) Anmelder: tesa AG, 20253 Hamburg (DE)
(72) Erfinder: Azar, Gabriel, 22547 Hamburg (DE)
(74) Vertreter: Stubbe, Andreas

(57) **Zusammenfassung**

Ventil für einen Behälter mit einem Boden mit einer ersten Schicht (25) aus einem elastischen Material, vorzugsweise einer Kunststofffolie, in der eine Vorrichtung (2) vorgesehen ist, bestehend aus mehreren Anstanzlinien (21), die strahlförmig in einem Punkt auf dem Boden zusammenlaufen, wobei auf der ersten Schicht (25) partiell eine zweite klebende Schicht (3) aufgetragen ist.

## Beschreibung

Die Erfindung betrifft ein Ventil für einen Becher, der einen Boden, insbesondere aus Kunststoff aufweist, wobei das Ventil nach dem Durchstoßen des Bodens ein Nachtropfen der nach dem Entleeren noch im Behälter befindlichen Restflüssigkeit verhindert oder zumindest verringert.

Zurzeit gewinnen Kaffeeautomaten, in denen der Verbraucher zum Behufe des Aufbrühens von Kaffee nur noch bereits fertig abgepackten Kaffee einfüllen muss, an Attraktivität.
Hierbei sind unterschiedliche Varianten bekannt. Beispielsweise kann die gewünschte Kaffeemenge ähnlich wie Tee in einem Teebeutel von einem Filterpapier aus Zellstoff umschlossen sein. Des Weiteren gibt es ein System, bei dem der Kaffee in einen Kunststoffbehälter vorportioniert wird. Ein Behälter enthält zumeist die richtige Dosierung für eine Tasse Kaffee. Dieser wird ungeöffnet in den Kaffeeautomaten eingeführt. Der Behälter ist üblicherweise durch einen Deckel aus Aluminiumfolie abgedeckt, so dass die Versiegelung dafür sorgt, dass das Kaffeearoma geschützt bleibt. Zum Aufbrühen wird mittels eines oder mehrerer Dorne die Folie von oben durchstoßen und perforiert, und das heiße Wasser in den Behälter eingefüllt. Zum Entleeren wird der Boden des Behälters ebenfalls zumeist mit einem Dorn durchbohrt, so dass der fertige Kaffee nach unten in ein Behältnis abfließen kann. Problematisch ist dabei, dass der Behälter zum Nachtropfen aufgrund darin befindlicher Kaffeereste neigt, denn der Behälter weist aufgrund der mechanischen Zerstörung des Bodens eine mehr oder minder große Öffnung auf. Dieses Nachtropfen ist aus hygienischen und optischen Gründen sehr unerwünscht.

Aufgabe der Erfindung ist es somit, ein Ventil im Kunststoffboden eines Behälters zu etablieren, das das Nachtropfen von im Behälter befindlicher Restflüssigkeit verhindert oder zumindest reduziert.

Gelöst wird diese Aufgabe durch ein Ventil, wie es im Hauptanspruch niedergelegt ist. Gegenstand der Unteransprüche sind dabei vorteilhafte Weiterbildungen des Erfindungsgegenstands sowie ein mit dem erfindungsgemäßen Ventil ausgerüsteten Behälter.

Demgemäß betrifft die Erfindung ein Ventil für einen Behälter (beispielsweise einen Becher) mit einem Boden mit einer ersten Schicht aus einem elastischen Material, vorzugsweise einer Kunststofffolie, in der eine Vorrichtung vorgesehen ist, bestehend aus mehreren Anstanzlinien, die strahlförmig in einem Punkt auf dem Boden zusammenlaufen, wobei auf der ersten Schicht partiell eine zweite klebende Schicht aufgetragen ist.
Aufgrund dieser Anstanzlinien ist die Stabilität der ersten Schicht reduziert.
Das Material der ersten Schicht muss so elastisch sein, dass die sich nach dem Durchstoßen der Vorrichtung samt Behälterbodens bildenden Stanzflügel zum einen ohne allzu große Kraft aus der Ausgangslage bewegt werden können und zum anderen nach Entlastung wieder möglichst exakt wieder in die Ausgangslage zurückkehren können, womit die Vorrichtung nach Art eines Ventils wieder nahezu vollkommen geschlossen ist.
Die Anstanzlinien können dabei durch übliche Stanz- oder Schnittverfahren erzeugt werden, sie können aber auch geplottet oder mit einem Laser erzeugt werden.

In einer ersten vorteilhaften Ausführungsform laufen mindestens drei, vorzugsweise zwischen sechs und 14, weiter vorzugsweise zwischen zehn oder zwölf Anstanzlinien in dem Punkt zusammen.

In einer weiteren vorteilhaften Ausführungsform verlaufen die Anstanzlinien geradlinig. Daneben sind auch andere Formen an Stanzlinien denkbar, beispielsweise könnten die Anstanzlinien wellen- oder zickzackförmig verlaufen.

In einer weiteren vorteilhaften Ausführungsform sind die Winkel zwischen den in einem Punkt zusammenlaufenden Anstanzlinien annähernd gleich groß, was zu einem symmetrischen Aufbau der Vorrichtung führt, insbesondere dann, wenn weiter vorzugsweise alle Anstanzlinien gleich lang sind.

In einer weiteren vorteilhaften Ausführungsform weisen die Anstanzlinien eine Tiefe auf, die zwischen ein und drei Viertel, vorzugsweise die Hälfte der Materialdicke der ersten Schicht ausmacht.

In einer weiteren vorteilhaften Ausführungsform werden die Anstanzlinien von oben und/oder von unten in den Boden gestanzt.

In einer weiteren vorteilhaften Ausführungsform liegen die anderen Enden der Anstanzlinien auf einer gedachten Kreislinie, wobei bevorzugt der Mittelpunkt des Kreises von dem Punkt gebildet wird, in dem die Anstanzlinien zusammenlaufen.

In einer weiteren vorteilhaften Ausführungsform weist die erste Schicht eine Dicke zwischen 50 und 150 µm auf und ist besonders vorzugsweise aus Polyester.

Vorzugsweise ist die zweite klebende Schicht so auf der ersten Schicht aufgebracht ist, dass die Vorrichtung vollkommen umschlossen ist.
Weiter vorzugsweise wird die zweite Schicht aus einem Kleber oder einem beidseitig klebenden Klebeband gebildet.

In einer besonders vorteilhaften Ausführungsform des Ventils ist die erste Schicht kreisförmig, die Vorrichtung im Mittelpunkt des Kreises angeordnet, und die zweite Schicht umgibt die Vorrichtung in Form eines Rings, wobei der Kreis der ersten Schicht und der Ring der zweiten Schicht konzentrisch angeordnet sind.

Schließlich umfasst die Erfindung einen Behälter mit einem Boden, auf dem ein Ventil verklebt ist, wobei das Ventil eine erste Schicht aus einem elastischen Material aufweist, vorzugsweise einer Kunststofffolie, in der eine Vorrichtung vorgesehen ist, bestehend aus mehreren Anstanzlinien, die strahlförmig in einem Punkt auf dem Boden zusammenlaufen, wobei auf der ersten Schicht partiell eine zweite klebende Schicht aufgetragen ist, die zur Fixierung des Ventils auf dem Boden dient.

In einer weiteren Fortbildung der Erfindung weist der Boden des Behälters ebenfalls eine Vorrichtung auf, bestehend aus mehreren Anstanzlinien, die strahlförmig in einem Punkt auf dem Boden zusammenlaufen. Auch diese Anstanzlinien können durch übliche Stanzoder Schnittverfahren erzeugt werden, sie können aber auch geplottet oder mit einem Laser erzeugt werden. Sofern der Behälter im Spritzgussverfahren hergestellt wird, können die Anstanzlinien bereits in der Gießform vorgesehen werden, so dass ein nachträgliches Bearbeiten des Behälters in einem zusätzlichen Schritt nicht erforderlich ist.
Auf diese Art wird ein doppeltes Ventil erzeugt, sowohl die Vorrichtung im Boden als auch die Vorrichtung im eigentlichen Ventil verhindern oder reduzieren das Nachtropfen von Restflüssigkeit. Des Weiteren ist der Boden des Behälters in seiner Stabilität geschwächt, so dass er leichter von einem Dorn oder einer ähnlichen Einrichtung mechanisch durchdrungen werden kann. Zu beachten ist, dass die die Anstanzung die Dichtigkeit des Behälters nicht beeinträchtigt.

In einer weiteren vorteilhaften Ausführungsform weist der Behälter eine Wandstärke auf von 50 bis 200 µm, vorzugsweise 150 µm.

Geeignet ist das Ventil für alle Behälter, in denen Flüssigkeit ist, die dadurch entleert werden kann, dass der Boden des Behälters durchstoßen wird.
Dabei können die Behälter auch Pulver oder sonstige Inhaltsstoffe enthalten, die zunächst durch das Einfüllen einer Flüssigkeit aufgelöst werden, bevor eine Entnahme erfolgt.

Als geeignete Materialien für den Behälter kommen Polyethylen (zum Beispiel HDPE), Polyethylenterephthalat, Polypropylen oder Polystyrol infrage. Diese Aufzählung ist aber nicht abschließend zu verstehen. Dem Fachmann sind weitere Kunststoffe bekannt, aus denen er je nach Anwendungsfall einen geeigneten auswählen würde.

Als Folienmaterial für die erste Schicht werden bevorzugt Polyolefine, jedoch sind auch Copolymere aus Ethylen und polaren Monomeren wie Styrol, Vinylacetat, Methylmethacrylat, Butylacrylat oder Acrylsäure eingeschlossen. Es kann ein Homopolymer wie HDPE, LDPE, MDPE oder ein Copolymer aus Ethylen einem weiteren Olefin wie Propen, Buten, Hexen oder Octen (zum Beispiel LLDPE, VLLDE) sein.

Geeignet sind auch Polypropylene (zum Beispiel Polypropylen-Homopolymere, Polypropylen-Random-Copolymere oder Polypropylen-Block-Copolymere).
Die Folie kann unverstreckt sein.
Besonders bevorzugt sind Folien auf Basis Polyester.

Die Klebemasse beziehungsweise die Klebemasse in den Klebebändern kann eine (Selbst-)Klebemasse sein, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS) und Styrol-Butadien-Styrol (SBS)-Typen.

Daneben hat sich ein 100%-System auf Styrol-lsopren-Styrol (SIS) als geeignet erwiesen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110°C bis 140 °C.
Die thermische Anregung der Vernetzer kann auch durch IR-Strahlen oder hochenergetische Wechselfelder erfolgen.

Vorteilhaft haben sich als Klebemasse eine solche auf Acrylathotmelt-Basis, auf Lösemittelbasis oder auf wässriger Basis erwiesen, wobei erstere einen K-Wert von mindestens 20 aufweisen kann, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird.
Die Klebemasse auf Acrylathotmelt-Basis kann aber auch chemisch vernetzt sein.

In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal ® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Abschließend sei erwähnt, dass auch Polyurethan basierende Kleber geeignet sind.

Anhand der nachfolgend beschriebenen Figuren wird eine besonders vorteilhafte Ausführung der Erfindung näher erläutert, ohne damit die Erfindung unnötig einschränken zu wollen. Es zeigen
- Figur 1: die Draufsicht auf ein erfindungsgemäßes Ventil und
- Figur 2: einen Behälter mit einem erfindungsgemäßen Ventil, das gemäß der Linie A-A in Figur 1 geschnitten dargestellt ist.

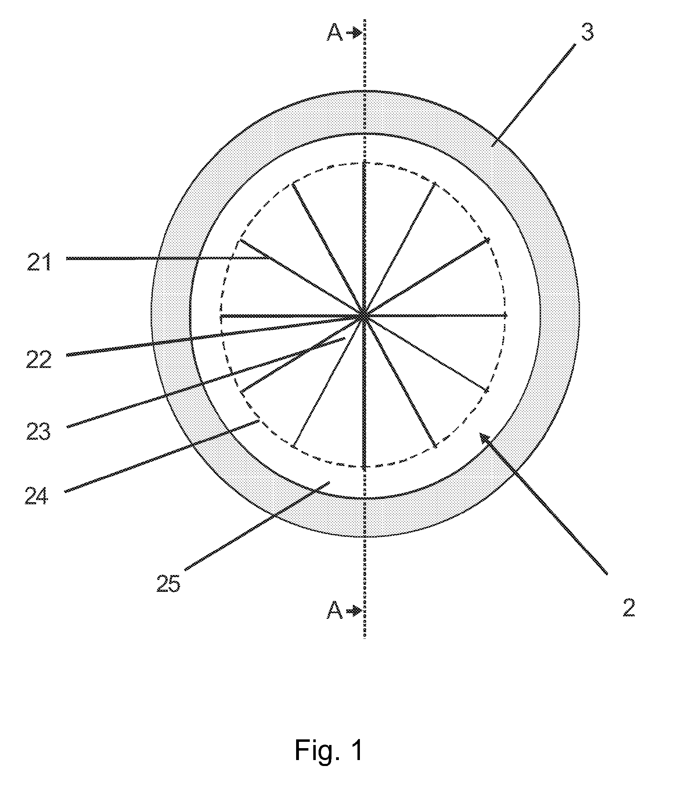

In der Figur 1 ist ein Ventil in der Draufsicht gezeigt. Das Ventil besteht aus einer ersten Schicht 25 aus einer elastischen Polyesterfolie, in der eine Vorrichtung 2 vorgesehen ist, bestehend aus mehreren Anstanzlinien 21, die strahlförmig in einem Punkt 22 in der ersten Schicht 2 zusammenlaufen. In diesem Fall sind insgesamt zwölf Anstanzlinien 21 vorhanden, die allesamt geradlinig sind. Die Winkel zwischen den Anstanzlinien 21 sind alle gleich groß, so dass die Vorrichtung 2 einen vollkommen symmetrischen Aufbau aufweist.
Die anderen Enden der Anstanzlinien 21 liegen auf einer gedachten Kreislinie 24, wobei der Mittelpunkt des Kreises 24 von dem Punkt 22 gebildet wird, in dem die Anstanzlinien 21 zusammenlaufen.
Des Weiteren ist die erste Schicht 25 kreisförmig, die Vorrichtung 2 im Mittelpunkt 22 des Kreises angeordnet, und die zweite klebende Schicht 3 umgibt die Vorrichtung 2 in Form eines Rings, wobei der Kreis der ersten Schicht 25 und der Ring der zweiten Schicht 3 konzentrisch angeordnet sind. Die klebende Schicht 3 besteht aus einem doppelseitigen Klebeband und dient zur Fixierung des Ventils an einem Boden eines Behälters.

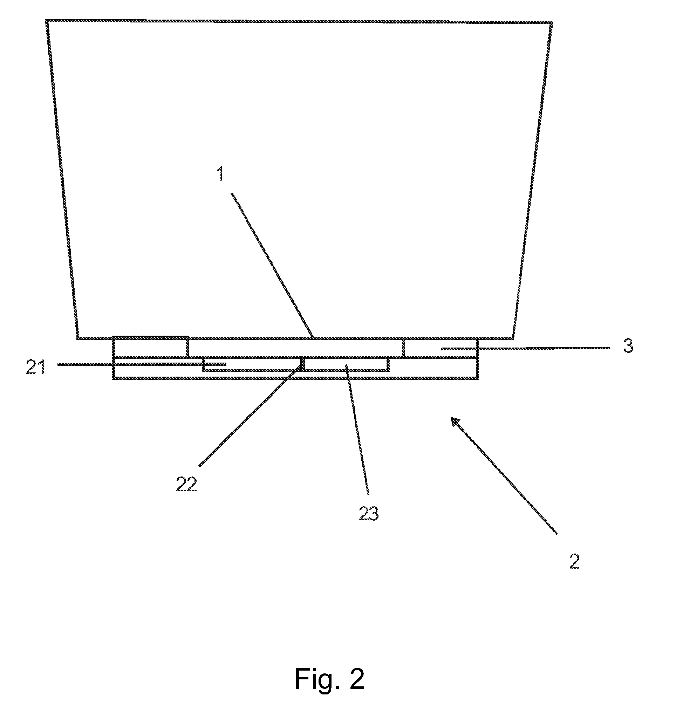

In der Figur 2 ist ein Behälter mit einem erfindungsgemäßen Ventil gezeigt, das gemäß der Linie A-A in Figur 1 geschnitten dargestellt ist.
Das Ventil ist dabei mittels des doppelseitig klebenden Klebebands 3 am Boden 1 des Behälters fixiert. Im Schnitt sind dabei zwei Anstanzlinien 21 gezeigt. Es ist gezeigt, dass die Dicke des Materials der ersten Schicht 25 im Bereich der Anstanzlinien 21 deutlich reduziert ist.
Zum Entleeren des Behälters durchdringt ein Dorn die erste Schicht 25 des Ventils sowie den Boden 1, und zwar möglichst in der Nähe des Punktes 22. Wenn dies der Fall ist, wird ein Loch in den Boden gerissen, und zuvor reißen die Anstanzlinien 21, bei denen die Materialdicke der ersten Schicht 25 deutlich reduziert ist, auf, so dass sich zwölf Stanzflügel 23 ergeben, deren Spitzen durch das sich im Boden 1 ergebende Loch in das Innere des Behälters gedrückt werden. Zwischen den einzelnen Stanzflügeln 23 und dem Dorn entstehen dabei ausreichend große Lücken, durch die die in dem Behälter vorhandene Flüssigkeit abfließen kann. Wird der Dorn nun wieder aus dem Behälter herausgezogen, federn die Stanzflügel 23 aufgrund der Steifigkeit des Materials, aus dem die erste Schicht 25 gefertigt ist, in ihre Ausgangsposition zurück und verschließen auf diese Art wieder den Boden 1 nahezu vollständig. Flüssigkeit könnte dann nur durch die aufgerissenen Anstanzlinien 21 dringen. Je nach Material der ersten Schicht 25 oder je nach Art der Flüssigkeit ist die Oberflächenspannung der Flüssigkeit aber so hoch, dass sogar jegliches Durchdringen der Flüssigkeit ausgeschlossen ist.
Das erfindungsgemäße Ventil vermindert das Nachtropfen. Bei geeigneter Materialwahl wird das Nachtopfen sogar vollständig unterdrückt.

## Patentansprüche

1. Ventil für einen Behälter mit einem Boden mit einer ersten Schicht aus einem elastischen Material, vorzugsweise einer Kunststofffolie, in der eine Vorrichtung vorgesehen ist, bestehend aus mehreren Anstanzlinien, die strahlförmig in einem Punkt auf dem Boden zusammenlaufen, wobei auf der ersten Schicht partiell eine zweite klebende Schicht aufgetragen ist.

2. Ventil nach Anspruch 1, **dadurch gekennzeichnet, dass** mindestens drei, vorzugsweise zwischen sechs und 14, weiter vorzugsweise zwischen zehn oder zwölf Anstanzlinien in dem Punkt zusammenlaufen.

3. Ventil nach Anspruch 1 oder 2, **dadurch gekennzeichnet, dass** die Anstanzlinien geradlinig verlaufen.

4. Ventil nach zumindest einem der Ansprüche 1 bis 3, **dadurch gekennzeichnet, dass** die Winkel zwischen den in einem Punkt zusammenlaufenden Anstanzlinien annähernd gleich groß sind.

5. Ventil nach zumindest einem der vorherigen Ansprüche, **dadurch gekennzeichnet, dass** die Anstanzlinien eine Tiefe in der ersten Schicht aufweisen, die zwischen ein und drei Viertel, vorzugsweise die Hälfte der Materialdicke der ersten Schicht ausmacht.

6. Ventil nach zumindest einem der vorherigen Ansprüche, **dadurch gekennzeichnet, dass** die Anstanzlinien von oben und/oder von unten in die erste Schicht gestanzt werden.

7. Ventil nach zumindest einem der vorherigen Ansprüche, **dadurch gekennzeichnet, dass** die anderen Enden der Anstanzlinien auf einer gedachten Kreislinie liegen, wobei bevorzugt der Mittelpunkt des Kreises von dem Punkt gebildet wird, in dem die Anstanzlinien zusammenlaufen.

8. Ventil nach zumindest einem der vorherigen Ansprüche, **dadurch gekennzeichnet, dass** die zweite klebende Schicht so auf der ersten Schicht aufgebracht ist, dass die Vorrichtung vollkommen umschlossen ist.

9. Ventil nach zumindest einem der vorherigen Ansprüche, **dadurch gekennzeichnet, dass** die zweite Schicht aus einem Kleber oder einem beidseitig klebenden Klebeband gebildet wird.

10. Ventil nach zumindest einem der vorherigen Ansprüche, **dadurch gekennzeichnet, dass** die erste Schicht kreisförmig ist, die Vorrichtung im Mittelpunkt des Kreises angeordnet ist und die zweite Schicht die Vorrichtung in Form, eines Rings umgibt, wobei der Kreis der ersten Schicht und der Ring der zweiten Schicht konzentrisch angeordnet sind.

11. Behälter mit einem Boden, auf dem ein Ventil verklebt ist, wobei das Ventil eine ersten Schicht aus einem elastischen Material aufweist, vorzugsweise einer Kunststofffolie, in der eine Vorrichtung vorgesehen ist, bestehend aus mehreren Anstanzlinien, die strahlförmig in einem Punkt auf dem Boden zusammenlaufen, wobei auf der ersten Schicht partiell eine zweite klebende Schicht aufgetragen ist, die zur Fixierung des Ventils auf dem Boden dient.

12. Behälter mit einem Boden, auf dem ein Ventil verklebt ist, wobei das Ventil eine ersten Schicht aus einem elastischen Material aufweist, vorzugsweise einer Kunststofffolie, in der eine Vorrichtung vorgesehen ist, bestehend aus mehreren Anstanzlinien, die strahlförmig in einem Punkt auf dem Boden zusammenlaufen, wobei auf der ersten Schicht partiell eine zweite klebende Schicht aufgetragen ist, die zur Fixierung des Ventils auf dem Boden dient und wobei der Boden des Behälters ebenfalls eine Vorrichtung aufweist, bestehend aus mehreren Anstanzlinien, die strahlförmig in einem Punkt auf dem Boden zusammenlaufen.
